Europäisches Patentamt

European Patent Office

Office européen des brevets

(11) Veröffentlichungsnummer: **0 163 992**
A2

(12) **EUROPÄISCHE PATENTANMELDUNG**

(21) Anmeldenummer: 85105908.9

(22) Anmeldetag: 14.05.85

(51) Int. Cl.⁴: **F 16 L 21/08**

(30) Priorität: 18.05.84 DE 3418585

(71) Anmelder: SEILER, Georg, Pachmayrplatz 11,
D-8000 München 81 (DE)

(43) Veröffentlichungstag der Anmeldung: 11.12.85
Patentblatt 85/50

(72) Erfinder: SEILER, Georg, Pachmayrplatz 11,
D-8000 München 81 (DE)

(84) Benannte Vertragsstaaten: AT BE CH FR GB IT LI LU NL
SE

(74) Vertreter: Fricke, Joachim, Dr. et al, Dr. R. Döring, Dr. J.
Fricke, Patentanwälte Josephspitalstrasse 7,
D-8000 München 2 (DE)

(54) Abgedichtete und gegen Schubkräfte gesicherte Muffenverbindung an Kunststoffrohren.

㊗ Es ist eine abgedichtete und gegen Schubkräfte gesicherte Muffenverbindung an Kunststoffrohren vorgesehen, bei denen der Dichtring die in der Rohrleitung auftretenden Kräfte unmittelbar als axiale Schubkräfte auf einen schräg geschlitzten Klemmring von dreieckförmigem Querschnitt übertragen, der in der Muffe keilförmig verschiebbar ist und durch die Verschiebung radiale Klemmkräfte entwickelt und gleichzeitig durch formschlüssigen Eingriff in eine Ringnut des Einsteckendes Schubkräfte auch nach Art eines axialen Anschlages auszunehmen vermag, der darüber hinaus die Anschlagskraft wiederum in eine radiale Klemmkraft umwandelt.

3995 EU 0163992

## Abgedichtete und gegen Schubkräfte gesicherte Muffenverbindung an Kunststoffrohren

Aus der DE-OS 28 54 868 ist eine Muffenverbindung bekannt, bei der ein kombinierter Dichtungs- und Schubsicherungsring vorgesehen ist. In den Dichtungsring sind in Umfangsabständen angeordnete Klemmelemente in Form von Klemmstücken aus Kunststoff vorgesehen. Jedes Klemmstück weist bei Blickrichtung in Umfangsrichtung einen keilförmigen Querschnitt auf. Auf der teilzylindrischen Innenfläche kann das Klemmstück einen festen Belag aus Körnern aus härterem Material aufweisen.

Eine weitere Klemmeinrichtung ist aus der DE-PS 12 35 691 bekannt. Die Praxis zeigt, daß mit solchen Klemmeinrichtungen eine Schubsicherung auf Dauer von Kunststoffrohren nicht möglich ist. Dies liegt einmal daran, daß es an der erforderlichen Griffigkeit zwischen Kunststoffrohr und Klemmring fehlt, zum anderen wird durch die dauernde Belastung eine allmähliuche bleibende Verformung des Kunststoffrohres bewirkt, welche die Verbindung weiter lockert. Umfangreiche Versuche haben diesen Sachverhalt bestätigt.

Bei der Lösung nach der DBP 12 49 028 erfolgt mittels eines Profilringes eine formschlüssige Verbindung der miteinander zusammenwirkenden Rohre. Hier werden die gesamten auftretenden Kräfte in Form von Scherkräften übertragen. Diese ständig wirkenden Scherkräfte führen bei Kunststoffrohren bei Dauerbelastung ebenfalls zu Dauerverformungen und Einrissen, die eine zuverlässige und dauerhafte Schubsicherung nicht gewährleisten.

Es hat sich insoweit gezeigt, daß sich Schubsicherungen bei Kunststoffrohren wesentlich anders verhalten, als Schubsicherungen bei Stahl- oder Gußrohrverbindungen.

Es ist Aufgabe der Erindung, eine Muffenverbindung mit den Merkmalen des Oberbegriffs so weiterzubilden, daß auch bei Dauerbelastung eine nennenswerte bleibende Verformung im Bereich der Muffenverbindung ebensowenig wie Einrisse oder dgl. zu befürchten sind und die auftretenden Kräfte sicher und ohne Beschädigung der Rohre über diese Muffenverbindung aufgenommen werden können.

Diese Aufgabe wird durch die Maßnahme gemäß Anspruch 1 gelöst.

Es ist dabei von ganz besonderer Bedeutung, daß die auftretenden Kräfte im Bereich des Einsteckendes auf zwei verschiedene Weisen aufgenommen werden und zwar zu einem wesentlichen Teil durch Spann- oder Klemmkräfte und zu einem anderen beachtlichen Teil durch anschlagförmige formschlüssige Verbindung. Dies wird durch die besonderen Gestaltungsmaßnahmen erreicht, wie sie dem Anspruch 1 zu entnehmen sind.

Bei dieser Ausbildung wird die Schubsicherung zu einem erheblichen Teil durch umfängliche Einspannung des Einsteckendes über die flache Flanke der Umfangsnut und den entsprechenden Schubsicherungsring in Verbindung mit der langen Schrägfläche der Umfangssiche der Muffe erreicht. Der Schubsicherungsring greift dabei voll in die Umfangsnut ein und liegt satt an allen Bereichen dieser Umfangsnut über deren Flanken an. Es besteht eine großflächige Berührung zwischen Schubsicherungsring und Umfangsnut. Dadurch wird eine gleichförmige Krafteinleitung in das Einsteckende gewährleistet. Jedoch braucht über diese Einspannung nicht die gesamte Schubkraft aufgenommen zu werden, vielmehr erfolgt ein Teil der Aufnahme über die Anschlagwirkung zwischen den etwa senkrecht zur Rohrachse liegenden Flächen der Umfangsnut und des Schubsicherungsringes. Diese anschlagförmige Verbindung stellt außerdem noch ein Regulativ bei veränderlichen Schubkräften dar, indem jede Relativbewegung zwischen Einsteckende und Muffenende auch zu einer Relativbewegung zwischen Schubsicherungsring und langgestreckter Dreieckseite der Umfangssiche der Muffe führt, wodurch zugleich auch in Abhängigkeit von der Änderung der Schubkräfte auch die radialen Spannkräfte und damit die Haltekräfte verändert werden.

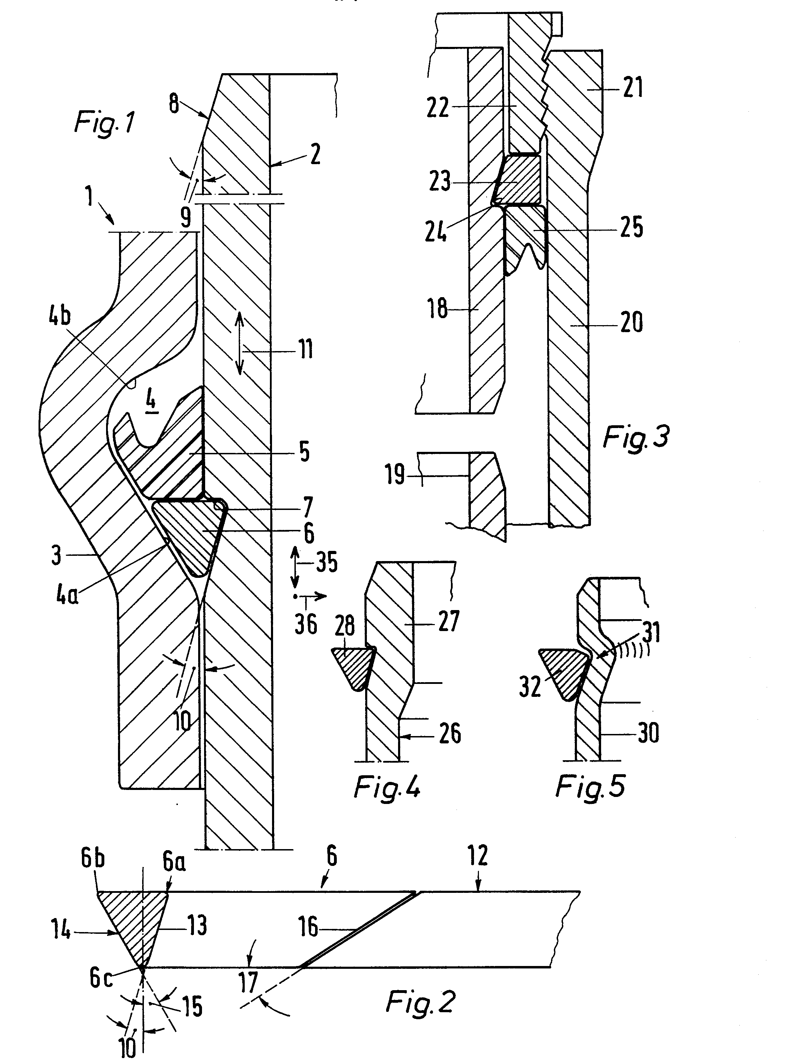

Die neue Muffenverbindung hat sich in intensiven Versuchen ausgezeichnet bewährt, insbesondere, wenn man in dem infragestehenden Längenbereich des Einsteckendes gemäß Figur 4 eine Querschnittsverdickung der Rohrwandung vorsieht. Wesentlich ist dabei, daß aufgrund der erheblichen Sicherungskräfte infolge der radialen Einspannung die Eingriffstiefe und damit die Tiefe der Umfangsnut im Einsteckende nur relativ gering zu sein braucht, ohne daß eine hohe Konzentration an Scherkräften auftreten und schädliche Wirkungen ausüben könnte.

Die in den beiden bereits behandelten Druckschriften aufgezeigten Lösungen sind dagegen solche, wie sie von Metallrohren her seit langem bekannt waren. Sie zeigen, daß die Fachleute versucht haben, durch Übernahme von bei Stahlrohren bewährten Schubsicherungen auch eine wirksame Schubsicherung bei Kunststoffrohren zu erreichen. Keine dieser Schubsicherungen hat sich auf dem Markt bewähren können.

Beim Einschieben des glatten Einsteckende gleitet das Ende des Einsteckendes am Klemmring und am Dichtring vorbei, bis der Klemmring hörbar in die Ringnut am Einsteckende einrastet. Das besondere der Muffenverbindung besteht darin, daß durch den Eingriff des Klemmringes in die Ringnut des Einsteckendes zwar eine Art formschlüssige Verbindung zwischen Einsteckende und Muffenende hergestellt

4

0163992

wird. Die Sicherung der Verbindung gegen Schubkräfte wird jedoch nicht alleine durch diese formschlüssige Verbindung bewirkt. Vielmehr sorgen die Schubkräfte in Verbindung mit dem formschlüssigen Eingriff des Klemmringes in die Ringnut dafür, daß der Klemmring durch axiales gleiten in der Umfangssicke des Muffenendes eine radiale Klemmkraft auf das Einsteckende entwickelt, die umso größer ist, je größer die Schubkraft wird, die an der Verbindung angreift. Da der Klemmring großflächig am Umfang des Einsteckendes anliegt, und die Klemmkräfte im wesentlichen als Stauchkräfte oder Druckkräfte auf das Material des Einsteckendes einwirken, bleibt der Anteil der Scherkräfte über den formschlüssigen Eingriff des Klemmringes in die Ringnut begrenzt. Dadurch wird ddas Material der Rohr wesentlich entlastet und dennoch eine hohe und gegen Dauerbelastung widerstandsfähige Schubsicherung erhalten.

Zudem ist zu berücksichtigen, daß es bei der Muffenverbindung um eine weit über die Welt verbreitete und im großen Umfnag eingesetzte Muffenausbildung geht. Die mit der Erfindung vorgeschlagene Lösung ist gerade deshalb auch von besonderer Bedeutung, weil sie ohne kleinste Änderung der Muffe die angestrebte Schutzsicherung gewährleistet, was von großer weltweiter wirtschaftlicher Bedeutung ist.

Die durch die Ringnut bewirkte Schwächung des Materials des Einsteckendes kann durch eine Verdickung der Wanddicke auf der Rohrinnenseite kompensiert werden. Es ist auch möglich die Ringnut im noch plastischen Zustand des Einsteckendes in dieses einzuprägen, so daß eine Schwächung nicht stattfindet. Auch das Muffenende kann im Bereich des langen flachen Schenkels der dreieckförmigen Umfangssicke durch Vergrößerung der Wanddicke oder Anformung von Versteifungsrippen oder dgl. verstärkt werden. Damit kann eine Kaltverformung der Rohre auch bei Dauerbelastung zuverlässig vermieden werden.

Die Erfindung wird nachfolgend anhand schematischer Zeichnungen an mehreren Ausführungsbeispielen näher erläutert.

Es zeigen:

Figur 1 im Ausschnitt und im relativ großen Maßstabe einen Längsschnitt durch einen Teil der Muffenverbindung gemäß der Erfindung.

Figur 2 in Ansicht und im Querschnitt den schräg geschlitzten Klemmring der Muffenverbindung nach Anspruch 1.

Figur 3 eine Systemergänzung der Muffenverbindung, und zwar im dargestellten Beispiel die Verbindung von zwei stumpf zu verbindenden glatten Rohrenden.

Figur 4 eine abgewandelte oder ergänzte Ausführungsform des Einsteckendes und

Figur 5 eine weiter abgewandtelte Ausführungsform.

Figur 1 und 2 zeigen eine abgedichtete und gegen Schubkräfte gesicherte Muffenverbindung an Kunststoffrohren, wobei das Muffenende mit 1 und das glatte Einsteckende mit 2 bezeichnet sind.

Das Muffenende ist nach außen so ausgeweitet, daß in dem Muffenende eine zur Rohrachse hin offene Umfangssicke 4 mit einem Querschnitt etwa in Form eines Dreieckes entsteht. Die Dreiecksform entspricht etwa der eines rechtwinkeligen Dreiecks, wobei der rechte Winkel am Boden der Umfangssicke abgerundet ausgebildet ist, der kurze Dreiecksschenkel 4b zum Muffenende hinweist, während der lange Schenkel 4a der Muffe mit der Rohrachse einen spitzen Winkel bildet.

In die Umfangssicke 4 ist ein Dichtungsring 5 eingelegt. Dieser weist im dargestellten Beispiel eine außenliegende kurze und eine innenliegende lange Lippe auf, die beide vom Ende der Muffe 3 wegweisen und über einen Basisabschnitt miteinander verbunden sind. Der Basisabschnitt kann auch einem härteren Gummi oder dgl. als die Lippen ausgebildet sein. Ferner ist in die Umfangssicke ein schräg geschlitzter Klemmring 6 eingelegt. Der Klemmring weist einen dreieckförmigen Querschnitt auf, wobei zwei Dreiecksecken in einer zur Rohrachse etwa senkrechten Ebene liegen. Wenigstens im Einbauzustand ist die radial nach innen weisende Dreiecksseite 13 gegenüber der Rohrachse unter einem steileren Winkel als die nach außen weisende Dreiecksseite 14 ausgebildet, wie dies durch die Winkel 10 bzw. 15 in Fig. 2 angedeutet ist. Bei einer bevorzugten Ausführungsform beträgt der Winkel 10 im Einbauzustand des Klemmringes 6 etwa 15° während der Winkel 15 etwa 30° beträgt.

Das glatte einsteckende 2 weist an seinem freien Ende eine Einführungsschräge 8 mit einem Winkel 9 von vorzugsweise etwa 15° auf. In einem vorbestimmten Abstand von dem freien Ende ist in dem Einsteckende 2 eine Umfangsnut 7 eingearbeitet. Diese weist eine zur offenen Seite der Muffe steile Flanke und eine in entgegengesetzter Richtung flache Flanke auf. Die steile Flanke verläuft etwa rechtwinkelig zur Rohrachse während die flache Flanke mit der Rohrachse einen kleinen Winkel von vorzugsweise etwa 15° einschließt.

Wie Fig. 4 zeigt, kann das Einsteckende 22 in dem Längenbereich, in dem die Ringnut eingearbeitet ist, durch eine Wandverstärkung auf seiner Innenseite verstärkt sein, wie dies bei 27 angedeutet ist. Damit werden die durch die Ringnut und die an der Ringnut durch Zusammenwirken mit dem Klemmring 28 auftretenden Kerbspannungen zuverlässig aufgenommen.

Statt dessen kann uch die Ringnut, wei bei 31 angedeutet, in die Wandung des Einsteckendes 30 im noch warmen oder plastischen Zustand des Materials des Einsteckendes eingeprägt ein, so daß die Ringnut zu keiner Wandschwächung des Einsteckendes führt. Wenn die steilere Flanke der Ringnut etwa bei der Einprägung nach Fig. 5 nicht genau in der rechtwinkeligen Ebene zur Rohrachse liegt kann die entsprechende Ecke 6a de dreieckförmigen Querschnittes des Klemmringes 32 entsprchend geformt sein, wie dies in Fig. 5 angedeutet ist.

Bei Betrieb wirken beispielsweise auf das Einsteckende 2 durch den Innendruck Schubkräfte 11. Diese sorgen für eine selbstdichtende Anlage des Dichtringes 5. Bei einer zwischen dem Einsteckende 2 und dem Muffenende 1 auftretenden Relativbewegung in Achsrichtung wird durch den formschlüssigen Eingriff des Klemmringes 6 in die Ringnut 7 der Klemmring 6 gegenüber dem Muffenende 1 in axialer Richtung bewegt. Dabei gleitet die Dreiecksseite 14 zwischen den Ecken 6b und 6c des Klemmringes auf der sanften Flanke der Umfangssicke 4, wodurch die radiale Klemmkraft des Klemmringes am Umfang des Einsteckendes 2 zunehmend größer wird. Dabei wirkt der Klemmring 6 als Zwischenglied zwischen Muffe und Einsteckende wie ein axialer Anschlag, der einen Teil dieder Kräfte durch Scherwirkung aufnimmt und auf die Muffe überträgt. Ein anderer wesentlicher Anteil dieser Schubkräfte wird durch radiale Klemmwirkung zwischen Einsteckende, Klemmring und Muffenende aufgenommen. Diese Verhältnisse sind durch die Vektoren 35, 36 in Figur 1 angedeutet.

Der Klemmring 2 kann im nicht eingebauten, entspannten Zustand gegenüber seiner Einbaulage in Fig. 1 auch um seine in Umfangsrichtung verlaufende Querschnittsmitte verdreht sein, so daß die Stirnfläche in Fig. 2 statt eben leicht trichterförmig ausgebildet ist, d.h. die Ecke 6a des Dreieckquerschnittes tiefer liegt als die Ecke 6b. Dies kann das Einrasten des Klemmringes beim Einschieben des Einsteckendes erleichtern. Der Klemmring besteht aus hartgestelltem Kunststoff, der aber ausreichend elastisch biegsam ist, so daß der schräg geschlitzte Klemmring leicht in die Umfangssicke der Muffe eingelegt werden kann. Der Schrägschlitz ist in Fig. 2 bei 16 angedeutet. Er verläuft zweckmäßigerweise unter einem Winkel von etwa 30° zur Umfangsrichtung des Klemmringes.

Wesentlich für die zuverlässige Funktion der Muffenverbindung ist auch die Tatsache, daß die Klemmwirkung des Klemmringes auch schon unabhängig von dem formschlüssigen Eingriff des Klemmringes 6 in die Ringnut 7 dadurch eintritt, daß bei zunehmendem Innendruck in der Rohrleitung der Dichtring 5 mit seinem ebenen Fußabschnitt unmittelbar und satt aufliegend in axialer Richtung auf den Klemmring 6 einwirkt und bestrebt ist diesen in Figur 1 nach unten zu verschieben, und zwar gegenüber der Muffe 3, so daß schon dadurch die radiale Klemmkraft des Klemmringes 6 erhöht wird. Der formschlüssige Eingriff des Klemmringes 6 in die Ringnut 7 bedeutet demgegenüber eine zusätzliche Schubsicherung, die zwangsläufig zu einer weiteren Steigerung der radialen Klemmkräfte führt, wenn es zu einer Relativbewegung in axialer Richtung zwischen dem Einsteckende 2 und dem Muffenende 1 kommen sollte.

Die neue Muffenverbindung kann auch an Rohrelementen verwendet werden, die an ihrem anderen Ende einen in bekannter Weise ausgebildeten Flansch aufweisen, der zur Verbindung der Kunststoffrohrleitungen mit Rohrelementen oder Ventilen dienen. Wie Fig. 3 zeigt kann der Klemmring auch in gleichem Maße zusammen mit dem Dichtring eingesetzt werden, um zwei glatte Rohrenden stumpf miteinander zu verbinden. Dazu dient eine Verbindungsmuffe 20, die an beiden Enden einen Innengewindeabschnitt 21 aufweist und die die beiden sich gegenüberliegenden glatten Rohrenden 18 und 19 mit Spiel umgibt.

In den Ringraum sind lose Dichtringe 25 eingelegt, die sich satt auf den axial weisenden Stirnflächen des Klemmringes 23 abstützten, der wiederum mit seiner radial und axial innenliegenden Kante in eine entsprechende Ringnut 24 des Rohrendes eingreift. Der Dichtring 25 und der Klemmring 23 werden auf jeder Seite der Muffe 20 in ihrer Lage durch Schraubringe 22 gehalten, die in das Innengewinde 21 der Muffe 20 lose eingeschraubt werden. Es handelt sich also um eine lose Muffenverbindung, die zwischen ihren Teilen Kräfte erst überträgt, wenn durch Innendruck in der Leitung die Dichtringe 25 und damit auch der Klemmring 23 belastet werden. In diesem Fall dienen die Schraubringe 22 in Verbindung mit der Muffe 20 zur Aufnahme der axialen Kräfte, d.h. sie bilden Widerlager für die Klemmringe 23. Man erkennt aus Fig. 3, daß in diesem Falle der Querschnitt des Klemmringes 23 gegenüber dem Klemmring 6 abgewandelt ist, und zwar im Hinblick auf die andere Gestaltung des Muffenrohres 20 im Vergleich zu dem Muffenende 3 nach Fig. 1.

Die innere Stirnfläche des Schraubringes 22 kann - anders als in Figur 3 gezeigt - in axialer Richtung und nach außen konisch ausgebildet sein, um mit einer entsprechenden, konischen Stirnfläche des Klemmringes 23 diesen in Anlage an dem Einsteckende zu halten und das Einrasten zu begünstigen und das Greifen des Ringes unter allen Umständen zu gewährleisten.

Die Anordnung kann auch so ausgebildet werden, daß das Schubsicherungselement aus einer Mehrzahl von unabhängigen Teilringelementen ausgebildet ist. Jedes Teilringelement weist den Querschnitt wie er aus den Figuren hervorgeht auf. Die Teilringelemente werden über das Material des Dichtungsringes durch Kleben oder Vulkanisieren zu einem, mit dem Dichtungsring eine biegsame Einheit bildenden Gesamtring vereinigt, der durch elastische Verformung leicht in die Umfangssicke der Muffe eingelegt werden kann.

Statt der Wanddickenverstärkung nach Fig. 4 kann auch von einem Einsteckrohr mit gleichbleibender Wandungsdicke ausgegangen werden und zur Verstärkung des die Umfangsnut 7 enthaltenden Abschnittes in das glatte Rohrende ein hohlzylindrischer Verstärkungskörper eingeklebt oder eingeschweißt werden.

Bei Bedarf kann auch die Muffe in dem kritischen Bereich verstärkt werden. Zu diesem Zweck kann auf die Muffe von außen eine Formhülse aufgesetzt , z.B. aufgeklebt oder dgl. werden, welche sich von der freien Stirnfläche des Muffenendes bis hin über die Länge des langen Schenkels 4a der Umfangssicke der Muffe erstreckt.

Statt eines Schrägschlitzes 60 nach Fig. 2 kann in einem Schubdsicherungsring der Schlitz 16 auch in einer radialen Ebene liegen.

Patentansprüche:

1. Abgedichtete und gegen Schubkräfte gesicherte Muffenverbindung an Kunststoffrohren, bei der das glatte
zylindrische Einsteckende eines Rohrteils mit geringem
Spiel in das Muffenende eines anderen Rohrteils aufgenommen wird, das Muffenende eine zur Rohrachse hin
offene Umfangssicke mit einem Querschnitt etwa in Form
eines rechtwinkeligen Dreiecks aufweist, dessen längere
Dreiecksseite zum Muffenende hin zur Rohrachse konvergiert, und ein Dichtungsring und eine Schubsicherung
in die Umfangssicke einlegbar sind, wobei die Schubsicherung ein ringförmiges Schubsicherungselement mit
keilförmigem Querschnitt aufweist, dessen nach außen
weisende Umfangsseite zur Rohrachse eine der längeren
Dreiecksseite der Umfangssicke entsprechende Neigung
aufweist und auf dieser längeren Dreieckseite gleitet,
dadurch g e k e n n z e i c h n e t, daß im Abstand
von der Stirnseite des glatten zylindrischen Einsteckendes (2) eine Umfangsnut (7) vorgesehen ist, die einerseits durch eine steile, etwa rechtwinkelig zur Rohrachse
verlaufende Flanke und andererseits durch eine der
langen Dreiecksseite (4a) der Umfangssicke (4) gegenüberliegende und zu dieser konvergierenden Flanke begrenzt ist, die mit der Rohrachse einen kleineren
Winkel als die längere Dreiecksseite der Umfangssicke
(4) einschließt, und daß der der Rohrachse zugewandte
Querschnittsbereich des Schubsicherungselementes durch
den Flanken der Umfangsnut (7) entsprechend zur Rohrachse geneigte Flächen (6a,6b,13) begrenzt ist und
mit diesem Querschnittsbereich in die Umfangsnut (7)
eingreift.

2. Muffenverbindung nach Anspruch 1, dadurch g e -
k e n n z e i c h n e t, daß der Winkel (10) der flach
geneigten Flanke der Umfangsnut (7) bzw. der mit dieser zusammenwirkenden inneren Umfangskante (13) des
Schubsicherungselementes mit der Rohrachse etwa halb

0163992

so groß ist wie der Winkel (15) zwischen Rohrachse und der längeren Dreiecksseite der Umfangssicke (4) bzw. der äußeren Umfangsseite (14) des Schubsicherungselementes.

3. Muffenverbindung nach Anspruch 2, dadurch g e - k e n n z e i c h n e t, daß die Winkel 15° bzw. 30° betragen.

4. Muffenverbindung nach Anspruch 2 oder 3, dadurch g e k e n n z e i c h n e t, daß der kleinere Winkel (10) etwa gleich dem Winkel (9) einer stirnseitigen Einlaufschräge (8) des zylindrischen Einsteckendes ist.

5. Muffenverbindung nach einem oder mehreren der Ansprüche 1 bis 4, dadurch g e k e n n z e i c h n e t, daß das Schubsicherungselement einen geschlitzten Klemmring von dreieckförmigem Querschnitt aufweist und aus einem hart eingestellten Kunststoff von begrenzter elastischer Biegsamkeit hergestellt ist.

6. Muffenverbindung nach Anspruch 1, dadurch g e - k e n n z e i c h n e t, daß das zylindrische Einsteckende in dem die Umfangsnut (7) aufweisenden Bereich (27) eine größere Wanddicke als in den anderen Bereichen des Rohres (26) aufweist.

7. Muffenverbindung nach Anspruch 1, dadurch g e - k e n n z e i c h n e t, daß die Ringnut (31) in das glatte zylindrische Rohrende (30) im plastischen Zustand des Rohrmaterials eingedrückt ist.

8. Muffenverbindung nach eine, der mehreren der Ansprüche 1 bis 4, dadurch g e k e n n z e i c h n e t, daß das Schubsicherungselement aus einer Mehrzahl von unabhängigen Teilringelementen von jeweils dreieckförmigem Querschnitt besteht, die unter bleibender Ver-

0163992

bindung mit dem Material des Dichtringes mit diesem zu einer elastisch biegsamen Einheit vereinigt sind.

9. Muffenverbindung nach Anspruch 1, dadurch g e - k e n n z e i c h n e t, daß in den die Umfangsnut (7) aufweisenden Bereich des zylindrischen Einsteck- endes ein hohlzylindrischer Verstärkungsteil einge- setzt ist.

10. Muffenverbindung nach Anspruch 1, dadurch g e - k e n n z e i c h n e t, daß auf den Bereich zwischen dem offenen Ende bis einschließlich der längeren Dreiecksseite (4a) der Umfangssicke eine hohlzylindrische Manschette auf das Muffenende aufsetzbar ist.

1/1    0163992

Fig.1

Fig.2

Fig.3

Fig.4

Fig.5